# EUROPEAN PATENT APPLICATION

(11) **EP 4 799 907 A1**
(43) Date of publication of application: **02.09.2026**
(21) Application number: 24880958.4
(22) Date of filing: 24.04.2024
(51) Int. Cl.: B62D 21/02, B62D 21/11

(54) **SUBFRAME OF VEHICLE, BODY ASSEMBLY OF VEHICLE, AND VEHICLE**

(30) Priority: 23.10.2023 CN 202311388285
(71) Applicant: Zhejiang Liankong Technologies Co., Ltd., Ningbo, Zhejiang 315336 (CN); Zhejiang Geely Automobile Engineering Technology Development Co., Ltd., Ningbo, Zhejiang 315336 (CN); Zhejiang Geely Holding Group Co., Ltd., Hangzhou, Zhejiang 310051 (CN)
(72) Inventor: SI, Haoran, Hangzhou, Zhejiang 310051 (CN); CHEN, Xu, Hangzhou, Zhejiang 310051 (CN); LI, Kelin, Hangzhou, Zhejiang 310051 (CN); XIE, Zhiqiang, Hangzhou, Zhejiang 310051 (CN); SI, Kaizhong, Hangzhou, Zhejiang 310051 (CN)
(74) Representative: Kraus & Lederer PartGmbB
(86) International application number: PCT/CN2024/089671
(87) International publication number: WO 2025/086579

(57) **Abstract**

A subframe (100) of a vehicle, a body assembly of a vehicle, and a vehicle. The subframe (100) comprises: a first cross member (10) and a second cross member (20); a plurality of subframe longitudinal members (30) connected to the first cross member (10) and the second cross member (20), the outermost subframe longitudinal members (30) being connected to control arm mounts (32); a third cross member (60) connected to the plurality of subframe longitudinal members (30), two ends of the third cross member (60) being arranged corresponding to the control arm mounts (32) of the corresponding subframe longitudinal members (30), respectively; a suspension mount (61) fixedly arranged on the third cross member (60); and supports (70) located between the third cross member (60) and the second cross member (20).

## Description

### CROSS-REFERENCE TO RELATED APPLICATION

This application is based on and claims priority to Chinese patent application No. 202311388285.6, filed on October 23, 2023, the entire contents of which are incorporated herein by reference.

### FIELD

The present disclosure relates to the field of vehicle technologies, and more particularly, to a subframe of a vehicle, a vehicle body assembly having the subframe, and a vehicle having the vehicle body assembly.

### BACKGROUND

In the related art, a subframe of an existing vehicle is provided with a control arm mounting frame and a suspension. The control arm mounting frame has insufficient rigidity, and road noise is transmitted to a passenger compartment through the control arm mounting frame. A powertrain of the vehicle is mounted at a front subframe through the suspension. However, the existing front subframe has insufficient rigidity and insufficient structural strength which results in transmission of vibration and noise from the powertrain to the passenger compartment, greatly reducing riding comfort of passengers.

### SUMMARY

The present disclosure aims to solve at least one of the technical problems in the related art.

To this end, an objective of the present disclosure is to provide a subframe of a vehicle, which can reduce transmission of road noise to a passenger compartment through a control arm mounting frame and can effectively suppress transmission of vibration and noise from a powertrain to the passenger compartment, improving riding comfort of passengers.

The present disclosure further provides a vehicle body assembly having the above-described subframe.

The present disclosure further provides a vehicle having the above-described vehicle body assembly.

The subframe of the vehicle according to the embodiments of the present disclosure includes: a first cross member and a second cross member that are spaced apart from each other in a first direction of the subframe; a plurality of subframe longitudinal members arranged in a second direction of the subframe, each of the plurality of subframe longitudinal members being connected to the first cross member and the second cross member, the first direction being perpendicular to the second direction, and each of outermost subframe longitudinal members being connected to a control arm mounting frame; a third cross member located between the first cross member and the second cross member in the first direction, each of the plurality of subframe longitudinal members being connected to the third cross member, and in the second direction, two ends of the third cross member being arranged to correspond to the control arm mounting frames of the corresponding subframe longitudinal members, respectively; a suspension mounting frame fixedly disposed at the third cross member; and a support frame located between the third cross member and the second cross member in the first direction and fixedly connected to the third cross member.

According to the subframe of the vehicle in the embodiments of the present disclosure, two ends of the third cross member are arranged to correspond to the control arm mounting frames of the corresponding subframe longitudinal members, respectively, the third cross member can support the control arm mounting frames of the corresponding subframe longitudinal members, in such a manner that rigidity of the control arm mounting frame can be improved, and the transmission of the road noise to the passenger compartment through the control arm mounting frame can be reduced. Thus, driving noise of the vehicle is reduced, and the riding comfort of the vehicle is further improved. Also, by means of assembly of the first cross member, the second cross member, the third cross member, and the subframe longitudinal members, the subframe is formed as a frame-type structure, which can improve fatigue strength and rigidity of the subframe. In addition, the support frame is fixedly connected to the third cross member, such that the support frame can support the third cross member and improve longitudinal rigidity of the third cross member in a front-rear direction of the vehicle. Thus, the rigidity and the strength of the subframe in the front-rear direction of the vehicle are improved, effectively suppressing the transmission of the vibration and the noise from the powertrain to the passenger compartment, and improving the riding comfort of the passengers. In addition, the suspension mounting frame is fixedly disposed at the third cross member, in such a manner that the third cross member can provide a mounting point for a suspension of the powertrain of the vehicle, disperse a load of the powertrain of vehicle, and also improve support rigidity of the suspension mounting frame, thus enhancing safety performance of the vehicle.

The vehicle body assembly according to the embodiments of the present disclosure includes the above-described vehicle body. The vehicle body has a vehicle body longitudinal member. The vehicle body assembly further includes the above-described subframe fixedly disposed at the vehicle body longitudinal member and located below the vehicle body longitudinal member.

The vehicle according to the embodiments of the present disclosure includes the above-described vehicle body assembly.

Additional aspects and advantages of the present disclosure will be provided in part in the following description, or will in part become apparent from the following description, or be learned from practicing of the present disclosure.

### BRIEF DESCRIPTION OF THE DRAWINGS

FIG. 1 is a schematic perspective structural view of a subframe according to an embodiment of the present disclosure.
FIG. 2 is a schematic assembly view of a subframe and a suspension according to an embodiment of the present disclosure.
FIG. 3 is a schematic assembly view of a subframe and a vehicle body longitudinal member according to an embodiment of the present disclosure.

Reference numerals in the specification are as follows:
subframe 100;
first cross member 10;
second cross member 20;
subframe longitudinal member 30; control arm mounting frame 32;
vehicle body 40; vehicle body longitudinal member 41;
third cross member 60; suspension mounting frame 61; first mounting portion 611; second mounting portion 612; first mounting hole 613; fitting structure 614; connection portion 615; bent portion 616; first cross member body 62; second cross member body 63; third cross member body 64;
support frame 70; steering gear mounting hole 71; first support frame plate 72; second support frame plate 73; first side connection end 74; second side connection end 75; third side connection end 76;
stabilizer bar mounting support 80;
powertrain 200.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

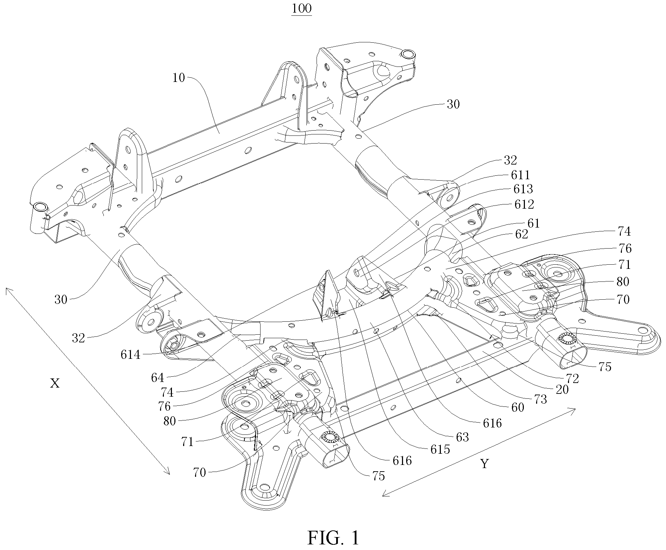

A subframe 100 of a vehicle, a vehicle body assembly, and the vehicle according to the embodiments of the present disclosure are described below with reference to FIG. 1 to FIG. 3. The subframe 100 may be a front subframe of the vehicle, and the present disclosure takes the subframe 100 serving as the front subframe as an example for illustration.

As illustrated in FIG. 1, the subframe 100 according to the embodiments of the present disclosure includes: a first cross member 10 and a second cross member 20 that are spaced apart from each other in a first direction of the subframe 100; a plurality of subframe longitudinal members 30 arranged in a second direction of the subframe 100; a third cross member 60; a suspension mounting frame 61; and a support frame 70. Each of the plurality of subframe longitudinal members 30 is connected to the first cross member 10 and the second cross member 20, and the first direction is perpendicular to the second direction. Each of outermost subframe longitudinal members 30 is connected to a control arm mounting frame 32. The third cross member 60 is located between the first cross member 10 and the second cross member 20 in the first direction, and each of the plurality of subframe longitudinal members 30 is connected to the third cross member 60. In the second direction, two ends of the third cross member 60 are arranged to correspond to the control arm mounting frames 32 of the corresponding subframe longitudinal members 30, respectively. The suspension mounting frame 61 is fixedly disposed at the third cross member 60. The support frame 70 is located between the third cross member 60 and the second cross member 20 in the first direction and fixedly connected to the third cross member 60.

The subframe 100 may be formed by welding section bars with a circular cross-section, a waist-shaped cross-section, and a rectangular cross-section, without a need for molds, which greatly saves mold costs and thus reduces manufacturing costs of the subframe 100. The subframe 100 may include the first cross member 10 and the second cross member 20 that are spaced apart from each other in the first direction of the subframe 100. The first direction of the subframe 100 refers to X direction in FIG. 1, and the first cross member 10 and the second cross member 20 are spaced apart from each other in the first direction. The subframe 100 may have the plurality of subframe longitudinal members 30. For example, the subframe 100 may have two, three, four or more subframe longitudinal members 30, and the present disclosure is not limited thereto. The subframe 100 may also have other quantities of subframe longitudinal members 30, as long as the subframe 100 has the plurality of subframe longitudinal members 30.

As illustrated in FIG. 1, X direction may be the first direction, Y direction may be the second direction, and the first direction is perpendicular to the second direction. The plurality of subframe longitudinal members 30 each extend in the first direction and are arranged in the second direction of the subframe 100. Two adjacent subframe longitudinal members 30 are spaced apart from each other in the second direction. Each of the plurality of subframe longitudinal members 30 is connected to the first cross member 10 and the second cross member 20. It should be noted that the first direction refers to a length direction of the vehicle, the second direction refers to a width direction of the vehicle, and the first direction is perpendicular to the second direction.

In an exemplary embodiment of the present disclosure, the subframe longitudinal member 30 is connected to the first cross member 10 at an end of the subframe longitudinal member 30, and is connected to the second cross member 20 at the other end of the subframe longitudinal member 30. For example, the subframe longitudinal member 30 may be welded to the first cross member 10 and the second cross member 20, or the subframe longitudinal member 30 may be bolted to the first cross member 10 and the second cross member 20, but the present disclosure is not limited thereto. The subframe longitudinal member 30 may be connected to the first cross member 10 and the second cross member 20 in other manners, as long as each of the plurality of subframe longitudinal members 30 is connected between the first cross member 10 and the second cross member 20. Thus, with each of the plurality of subframe longitudinal members 30 connected between the first cross member 10 and the second cross member 20, a frame structure can be formed among the subframe longitudinal member 30, the first cross member 10, and the second cross member 20, which can further improve structural rigidity of the subframe 100, further enhancing safety performance of the vehicle.

Each of outermost subframe longitudinal members 30 is connected to the control arm mounting frame 32. For example, the subframe longitudinal member 30 may be welded to the control arm mounting frame 32, or the subframe longitudinal member 30 may be bolted to the control arm mounting frames 32, but the present disclosure is not limited thereto. The subframe longitudinal member 30 may also be connected to the control arm mounting frame 32 in other manners, as long as each of the outermost subframe longitudinal members 30 is connected to the control arm mounting frame 32. Thus, a fatigue load of the control arm mounting frame 32 can be better dispersed to the subframe longitudinal member 30.

The third cross member 60 may be located between the first cross member 10 and the second cross member 20 in the first direction. For example, the third cross member 60 is located at a middle position between the first cross member 10 and the second cross member 20, or the third cross member 60 is located between the first cross member 10 and the second cross member 20 and closer to the first cross member 10, or the third cross member 60 is located between the first cross member 10 and the second cross member 20 and closer to the second cross member 20, but the present disclosure is not limited thereto. The third cross member 60 may also be located at other positions between the first cross member 10 and the second cross member 20, as long as the third cross member 60 is located between the first cross member 10 and the second cross member 20 in the first direction.

The third cross member 60 is connected to the plurality of subframe longitudinal members 30. For example, the third cross member 60 may be connected to two subframe longitudinal members 30, or the third cross member 60 may be respectively connected to three subframe longitudinal members 30, but the present disclosure is not limited thereto. The third cross members 60 may also be connected to the subframe longitudinal members 30 of other quantities, as long as the third cross member 60 is connected to the plurality of subframe longitudinal members 30.

In the second direction, two ends of the third cross member 60 are arranged to correspond to the control arm mounting frames 32 of the corresponding subframe longitudinal members 30, respectively. Such an arrangement enables the fatigue load of the control arm mounting frames 32 to be better dispersed to the third cross member 60, and further enables the fatigue load of the control arm mounting frame 32 to be better dispersed to the entire subframe 100, enhancing fatigue durability of the control arm mounting frame 32.

The suspension mounting frame 61 is fixedly disposed at the third cross member 60. For example, the suspension mounting frame 61 may be fixedly welded to the third cross member 60, or the suspension mounting1frame 61 may be fixedly bolted to the third cross member 60, but the present disclosure is not limited thereto. The suspension mounting frame 61 may also be connected to the third cross member 60 in other manners, as long as the suspension mounting frame 61 is fixedly disposed at the third cross member 60. In an exemplary embodiment of the present disclosure, the suspension mounting frame 61 may be a mounting frame in a U-shaped shape, and an upper end of the suspension mounting frame 61 extend towards both sides of the third cross member 60, forming a splayed shape, which can better enhance structural rigidity of the suspension mounting frame 61 and also disperse a load of a powertrain 200 of the vehicle to the both sides of the third cross member 60. A lower end of the suspension mounting frame 61 may be a closed structure, which can further improve support rigidity of the suspension mounting frame 61.

The support frame 70 is located between the third cross member 60 and the second cross member 20 in the first direction and fixedly connected to the third cross member 60. For example, the support frame 70 may be welded to the third cross member 60, or the support frame 70 may be bolted to the third cross member 60, but the present disclosure is not limited thereto. The support frame 70 may also be connected to the third cross member 60 in other manners, as long as the support frame 70 is located between the third cross member 60 and the second cross member 20 in the first direction and fixedly connected to the third cross member 60.

In this way, the support frame 70 is fixedly connected to the third cross member 60, which can provide support for the third cross member 60 in a height direction of the vehicle, enhancing rigidity of the third cross member 60 in the height direction of the vehicle, and further enhancing the rigidity of the subframe 100 in the height direction of the vehicle. Transmission of howling noise from the powertrain 200 of the vehicle in the height direction of the vehicle can also be reduced, thus reducing noise pollution of the vehicle.

According to the subframe 100 of the vehicle in the embodiments of the present disclosure, the both ends of the third cross member 60 are arranged to correspond to the control arm mounting frames 32 of the corresponding subframe longitudinal members 30, respectively, the third cross member 60 can support the control arm mounting frames 32 of the corresponding subframe longitudinal members 30, in such a manner that rigidity of the control arm mounting frame 32 can be improved, and the transmission of the road noise to the passenger compartment through the control arm mounting frames 32 can be reduced. Thus, driving noise of the vehicle is reduced, and riding comfort of the vehicle is further improved. Also, by means of the cooperation of the first cross member 10, the second cross member 20, the third cross member 60, and the subframe longitudinal members 30 that are fitted together, the subframe 100 is formed as a frame-type structure, which can improve fatigue strength and rigidity of the subframe 100. In addition, the support frame 70 is fixedly connected to the third cross member 60, such that the support frame 70 can support the third cross member 60 and improve longitudinal rigidity of the third cross member 60 in a front-rear direction of the vehicle. Thus, the rigidity and the strength of the subframe 100 in the front-rear direction of the vehicle is improved, effectively suppressing the transmission of the vibration and the noise from the powertrain 200 to the passenger compartment, and improving the riding comfort of the passengers. In addition, the suspension mounting frame 61 is fixedly disposed at the third cross member 60, in such a manner that the third cross member 60 can provide a mounting point for a suspension of the powertrain 200 of the vehicle, enable a load of the powertrain 200 of the vehicle to be dispersed, and also improve support rigidity of the suspension mounting frame 61, thus enhancing safety performance of the vehicle.

According to some embodiments of the present disclosure, as illustrated in FIG. 1, the both ends of the third cross member 60 are arranged to correspond to rear ends of the corresponding control arm mounting frames 32, respectively. In the second direction, the ends of the third cross member 60 are arranged to correspond to the rear ends of the corresponding control arm mounting frames 32, respectively, and the first direction is a front-rear direction of the subframe 100. Such an arrangement enables the third cross member 60 to reliably support the control arm mounting frame 32 and further enhances the rigidity of the control arm mounting frame 32, reducing the transmission of the road noise to the passenger compartment through the control arm mounting frame 32, further reducing the driving noise of the vehicle, and further improving the riding comfort of the vehicle.

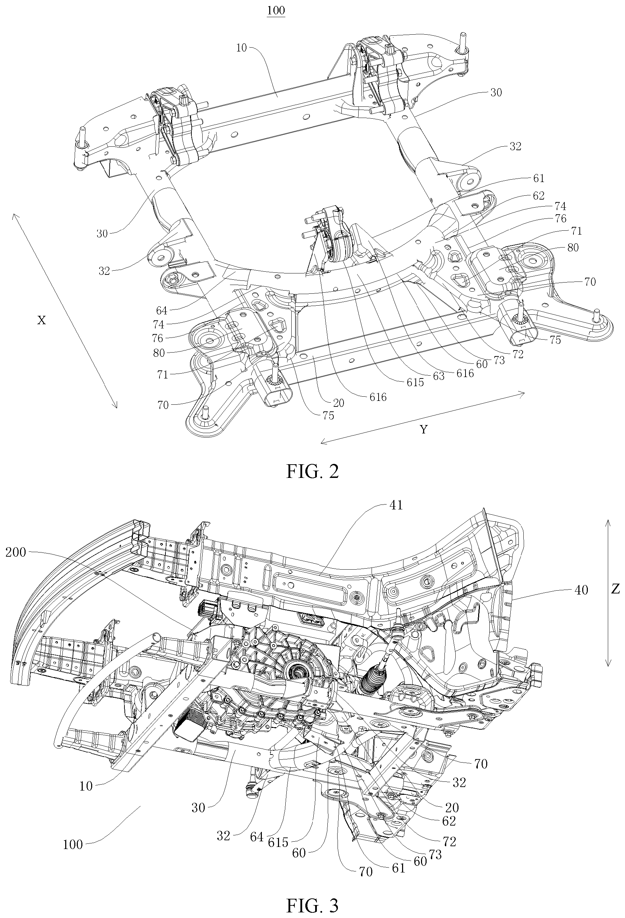

According to some embodiments of the present disclosure, as illustrated in FIG. 1 and FIG. 2, the suspension mounting frame 61 may be disposed at a middle position of the third cross member 60.

The suspension mounting frame 61 may be disposed at the middle position of the third cross member 60. Such an arrangement can evenly disperse the load of the powertrain 200 of the vehicle to the third cross member 60, and can also enhance the support rigidity of the suspension mounting frame 61, thus enhancing the safety performance of the vehicle.

According to some embodiments of the present disclosure, as illustrated in FIG. 1 and FIG. 2, the suspension mounting frame 61 may include a first mounting portion 611 and a second mounting portion 612. The first mounting portion 611 is opposite to and spaced apart from the second mounting portion 612 in the second direction. Each of the first mounting portion 611 and the second mounting portion 612 has a first mounting hole 613. An annular fitting structure 614 is fixedly disposed at the first mounting portion 611 and/or the second mounting portion 612. The fitting structure 614 has an internal thread at an inner circumferential wall of the fitting structure 614 and corresponds to a corresponding first mounting hole 613.

The suspension mounting frame 61 may include the first mounting portion 611 and the second mounting portion 612. The first mounting portion 611 may be opposite to and spaced apart from the second mounting portion 612 in the second direction. The first mounting portion 611 and the second mounting portion 612 may have a same shape and a same size. Each of the first mounting portion 611 and the second mounting portion 612 may have a first mounting hole 613. A first mounting hole 613 at the first mounting portion 611 is arranged to correspond to a first mounting hole 613 at the second mounting portion 612. Further, a fastener may pass through the first mounting hole 613 at the first mounting portion 611 and the first mounting hole 613 at the second mounting portion 612 to mount the suspension.

The annular fitting structure 614 is fixedly disposed at the first mounting portion 611 and/or the second mounting portion 612. In an exemplary embodiment of the present disclosure, the annular fitting structure 614 is fixedly disposed at each of the first mounting portion 611 and the second mounting portion 612, or the annular fitting structure 614 is fixedly disposed at either one of the first mounting portion 611 and the second mounting portion 612. The present disclosure takes a scenario where the annular fitting structure 614 is fixedly disposed at each of the first mounting portion 611 and the second mounting portion 612 as an example for illustration.

The annular fitting structure 614 may be a nut, an annular metal sheet or other fitting structures 614, but the present disclosure is not limited thereto. The annual fitting structure 614 may also be other fitting structures 614, and each of the first mounting portion 611 and the second mounting portion 612 may be welded to the annual fitting structure 614, or each of the first mounting portion 611 and the second mounting portion 612 may be integrally formed with the annual fitting structure 614, but the present disclosure is not limited thereto. Each of the first mounting portion 611 and the second mounting portion 612 may be connected to the annular fitting structure 614 in other manners, as long as the annular fitting structure 614 is fixedly disposed at each of the first mounting portion 611 and the second mounting portion 612.

The fitting structure 614 has an internal thread at the inner circumferential wall of the fitting structure 614 and corresponds to the corresponding first mounting hole 613, to facilitate the fastener to sequentially pass through the first mounting hole 613 and the fitting structure 614 for mounting the suspension between the first mounting portion 611 and the second mounting portion 612. In other words, the configuration facilitates the mounting of the suspension to the suspension mounting frame 61 of the third cross member 60. Thus, the third cross member 60 can provide the mounting point for the suspension of the powertrain 200 of the vehicle, enable the load of the powertrain 200 of the vehicle to be dispersed, and also improve the support rigidity of the suspension mounting frame 61, thus enhancing the safety performance of the vehicle.

According to some embodiments of the present disclosure, as illustrated in FIG. 1 and FIG. 2, the suspension mounting frame 61 may further include a connection portion 615. The connection portion 615 is connected between the first mounting portion 611 and the second mounting portion 612. The connection portion 615 is arranged adjacent to a lower end of the first mounting portion 611 and a lower end of the second mounting portion 612.

The connection portion 615 is connected between the first mounting portion 611 and the second connection portion 612, and the connection portion 615 is disposed adjacent to the lower end of the first mounting portion 611 and the lower end of the second mounting portion 612. For example, the connection portion 615 is connected to the lower end of the first mounting portion 611 and the lower end of the second mounting portion 612. The connection portion 615 may be welded to the lower end of the first mounting portion 611 and the lower end of the second mounting portion 612. Alternatively, the connection portion 615 may be integrally formed with the lower end of the first mounting portion 611 and the lower end of the second mounting portion 612, but the present disclosure is not limited thereto. The connection portion 615 may also be connected to the lower end of the first mounting portion 611 and the lower end of the second mounting portion 612 in other manners, as long as the connection portion 615 is connected between the first mounting portion 611 and the second mounting portion 612.

Thus, the connection portion 615 is connected between the first mounting portion 611 and the second mounting portion 612, in such a way that the lower end of the suspension mounting frame 61 is formed as the closed structure, which further enhances the support rigidity of the suspension mounting frame 61 and thus enhances the safety performance of the subframe 100.

According to some embodiments of the present disclosure, as illustrated in FIG. 1 and FIG. 2, the first mounting portion 611 has a bent portion 616 at an upper end of the first mounting portion 611, and/or the second mounting portion 612 has a bent portion 616 at an upper end of the second mounting portion 612. The bent portion 616 is connected to the third cross member 60 and is bent in the second direction.

The first mounting portion 611 may have the bent portion 616 at the upper end of the first mounting portion 611, and/or the second mounting portion 612 may have the bent portion 616 at the upper end of the second mounting portion 612. In an exemplary embodiment of the present disclosure, the bent portion 616 may be disposed at each of the upper end of the first mounting portion 611 and the upper end of the second mounting portion 612, or the bent portion 616 may be disposed at either one of the upper end of the first mounting portion 611 and the upper end of the second mounting portion 612. The present disclosure takes a scenario where the bent portion 616 may be disposed at each of the upper end of the first mounting portion 611 and the upper end of the second mounting portion 612 as an example for illustration. The bent portion 616 is connected to the third cross member 60. For example, the bent portion 616 may be welded to the third cross member 60, or the bent portion 616 may be bolted to the third cross member 60, but the present disclosure is not limited thereto. The bent portion 616 may be connected to the third cross member 60 in other manners, as long as the bent portion 616 is connected to the third cross member 60.

In addition, in the second direction, the bent portion 616 is bent outward towards the third cross member 60. Such an arrangement enables the upper end of the suspension mounting frame 61 to extend towards the both sides of the third cross member 60 to form a splayed shape, which can better enhance the structural rigidity of the suspension mounting frame 61 and also enable the load of the powertrain 200 of the vehicle to be dispersed to the both sides of the third cross member 60, further improving the support rigidity of the suspension mounting frame 61.

According to some embodiments of the present disclosure, as illustrated in FIG. 1 and FIG. 2, the third cross member 60 may be constructed as an arc-shaped structure. In the first direction, the third cross member 60 protrudes towards the second cross member 20.

The third cross member 60 may be constructed as the arc-shaped structure. In the first direction, the third cross member 60 protrudes towards the second cross member 20. In an exemplary embodiment of the present disclosure, the third cross member 60 may be constructed as a "C" shape or a substantially "C" shape, and a cross-section of the third cross member 60 may have an oblong shape. Such an arrangement enhances the rigidity of the third cross member 60 in the height direction of the vehicle without increasing a weight of the third cross member 60, improving the rigidity of the subframe 100, and thus enhancing the safety performance of the vehicle. According to some embodiments of the present disclosure, as illustrated in FIG. 1 and FIG. 2, the third cross member 60 may include a first cross member body 62, a second cross member body 63, and a third cross member body 64. The second cross member body 63 is connected between the first cross member body 62 and the third cross member body 63. The second cross member body 63 is constructed as an arc-shaped structure protruding towards the second cross member 20. Each of the first cross member body 62 and the third cross member body 64 is connected to a corresponding subframe longitudinal member 30 of the plurality of subframe longitudinal members 30.

The third cross member 60 may include the first cross member body 62, the second cross member body 63, and the third cross member body 64. The second cross member body 63 is connected between the first cross member body 62 and the third cross member body 64. That is, both ends of the second cross member body 63 are connected to the first cross member body 62 and the third cross member body 64, respectively. For example, the second cross member body 63 may be welded to the first cross member body 62 and the third cross member body 64, or the second cross member body 63 may be integrally formed with the first cross member body 62 and the third cross member body 64, but the present disclosure is not limited thereto. The second cross member body 63 may also be connected to the first cross member body 62 and the third cross member body 64 in other manners, as long as the second cross member body 63 is connected between the first cross member body 62 and the third cross member body 64.

Each of the first cross member body 62 and the third cross member body 64 is connected to a corresponding subframe longitudinal member 30 of the plurality of subframe longitudinal members 30. For example, each of the first cross member body 62 and the third cross member body 64 is welded to the corresponding subframe longitudinal member 30 of the plurality of subframe longitudinal members 30, or each of the first cross member body 62 and the third cross member body 64 is bolted to the corresponding subframe longitudinal member 30 of the plurality of subframe longitudinal members 30, but the present disclosure is not limited thereto. Each of the first cross member body 62 and the third cross member body 64 may also be connected to the corresponding subframe longitudinal member 30 of the plurality of subframe longitudinal members 30 in other manners, as long as each of the first cross member body 62 and the third cross member body 64 is connected to the corresponding subframe longitudinal member 30 of the plurality of subframe longitudinal members 30.

The second cross member body 63 is constructed as the arc-shaped structure protruding towards the second cross member 20. In an exemplary embodiment of the present disclosure, the second cross member body 63 may be constructed as a "C" shape or a substantially "C" shape, and a cross-section of the third cross member body 63 may have an oblong shape. Such an arrangement enhances of the rigidity of the third cross member 60 in the height direction of the vehicle without increasing the weight of the third cross member 60, improving the rigidity of the subframe 100, and thus enhancing the safety performance of the vehicle.

According to some embodiments of the present disclosure, as illustrated in FIG. 3, a height dimension of the second cross member body 63 in a third direction of the subframe 100 is H1; and a width dimension of the second cross member body 63 in the first direction of the subframe 100 is H2, where H2<H1. The first direction, the second direction, and the third direction are perpendicular to each other.

As illustrated in FIG. 3, Z direction may be the third direction corresponding to the height direction of the vehicle. The height dimension of the second cross member body 63 in the third direction of the subframe 100 is H1; and the width dimension of the second cross member body 63 in the first direction of the subframe 100 is H2, where H2<H1. The first direction, the second direction, and the third direction are perpendicular to each other. Such an arrangement enhances the rigidity of the third cross member 60 in the height direction of the vehicle without increasing the weight of the third cross member 60, improving the rigidity of the subframe 100, and thus enhancing the safety performance of the vehicle.

According to some embodiments of the present disclosure, 70 mm≤H1≤90 mm.

The height dimension H1 of the second cross member body 63 in the third direction of the subframe 100 may be any value in the range of 70 mm≤H1≤90 mm. For example, H1 may be 70 mm, 70.1 mm, 71 mm, 72 mm, 80 mm, 90 mm, etc., but the present disclosure is not limited thereto. H1 may also be any other value in the range of 70 mm≤H1≤ 90 mm, as long as H1 is the value in the range of 70 mm≤H1≤ 90 mm. Thus, setting of the height dimension H1 of the second cross member body 63 in the third direction of the subframe 100 in the range of 70 mm≤H1≤90 mm enhances the rigidity of the third cross member 60 in the height direction of the vehicle without increasing the weight of the third cross member 60, improving the rigidity of the subframe 100, and thus enhancing the safety performance of the vehicle.

According to some embodiments of the present disclosure, as illustrated in FIG. 1 and FIG. 2, the first cross member body 62 and/or the third cross member body 64 has a flat structure.

The first cross member body 62 and/or the third cross member body 64 has the flat structure. In an exemplary embodiment of the present disclosure, each of the first cross member body 62 and the third cross member body 64 may have the flat structure, or the first cross member body 62 has the flat structure, or the third cross member body 64 has the flat structure. The present disclosure takes a scenario where each of the first cross member body 62 and the third cross member body 64 has the flat structure as an example for illustration. Thus, by configuring each of the first cross member body 62 and the third cross member body 64 as the flat structure, each of the first cross member body 62 and the third cross member body 64 is facilitated to be connected to the corresponding subframe longitudinal member 30 of the plurality of subframe longitudinal members 30. In an exemplary embodiment of the present disclosure, connection parts, where the first cross member body 62 and the third cross member body 64 are connected to the respective subframe members 30, are arranged to correspond to the corresponding control arm mounting frames 32, which can enhance the rigidity of the control arm mounting frame 32 and reduce noise transmission from the mounting point of the control arm mounting frame 32. In addition, the control arm mounting frame 32 can better disperse the fatigue load to the subframe 100 through the third cross member 60, thus improving the fatigue durability of the subframe 100.

According to some embodiments of the present disclosure, as illustrated in FIG. 3, in the third direction of the subframe 100, an orthographic projection of the third cross member 60 is located at a rear side of an orthographic projection of the powertrain 200 of the vehicle.

In the third direction of the subframe 100, the orthographic projection of the third cross member 60 may be located on the rear side of the orthographic projection of the powertrain 200 of the vehicle, that is, the third cross member 60 is located at a rear end of the powertrain 200 of the vehicle, which facilitates the subframe 100 to provide the mounting point for the suspension of the powertrain 200 of the vehicle, thus dispersing the load of the powertrain 200 of the vehicle to the both sides of the third cross member 60, and further enhancing support rigidity of the subframe 100.

According to some embodiments of the present disclosure, as illustrated in FIG. 1 and FIG. 2, the support frame 70 may be fixedly connected to the second cross member 20.

The support frame 70 may be fixedly connected to the second cross member 20. For example, the support frame 70 may be welded to the second cross member 20, or the support frame 70 may be bolted to the second cross member 20, but the present disclosure is not limited thereto. The support frame 70 may also be connected to the second cross member 20 in other manners, as long as the support frame 70 is fixedly connected to the second cross member 20. Thus, the support frame 70 is fixedly connected to the second cross member 20, and the support frame 70 is also fixedly connected to the third cross member 60. That is, the support frame 70 is connected between the second cross member 20 and the third cross member 60, and the support frame 70 can support the second cross member 20 and the third cross member 60, which can enhance structural connection strength of the subframe 100, improving the fatigue strength and the rigidity of the subframe 100.

According to some embodiments of the present disclosure, as illustrated in FIG. 1 and FIG. 2, in the second direction, the outermost subframe longitudinal member 30 is fixedly connected to a corresponding support frame 70.

The support frame 70 may also be fixedly connected to a corresponding subframe longitudinal member 30. For example, the support frame 70 may be welded to the corresponding subframe longitudinal member 30, or the support frame 70 may be bolted to the corresponding subframe longitudinal member 30, but the present disclosure is not limited thereto. The support frame 70 may also be connected to the corresponding subframe longitudinal member 30 in other manners, as long as the support frame 70 is fixedly connected to the corresponding subframe longitudinal member 30. It should be noted that the subframe longitudinal member 30 corresponding to the support frame 70 refers to the subframe longitudinal member 30 that is adjacent to and near the support frame 70 in the second direction. Thus, by fixedly connecting the support frame 70 to the corresponding subframe longitudinal member 30, and also fixedly connecting the support frame 70 to the second cross member 20 and the third cross member 60, the structural connection strength and the rigidity of the subframe 100 can be further enhanced, avoiding a phenomenon of stress concentration on the subframe 100, and further improving the fatigue strength of the subframe 100.

According to some embodiments of the present disclosure, as illustrated in FIG. 1 and FIG. 2, two subframe longitudinal members 30 may be provided, and the support frame 70 is connected between the third cross member 60 and each of the two subframe longitudinal members 30.

The two subframe longitudinal members 30 may be provided, and the support frame 70 is connected between the third cross member 60 and each of the two subframe longitudinal members 30. In an exemplary embodiment of the present disclosure, the support frame 70 may be connected to a corner between each subframe longitudinal member 30 and the third cross member 60, as well as a corner between each subframe longitudinal member 30 and the second cross member 20. Such an arrangement can not only provide support for the third cross member 60 in the length direction of the vehicle, improving the rigidity of the third cross member 60 in the longitudinal direction of the vehicle and further improving the rigidity of the subframe 100 in the length direction of the vehicle, but also further enhances the structural connection strength of the subframe 100, avoiding the phenomenon of the stress concentration on the subframe 100, and further improving the fatigue strength of the subframe 100.

According to some embodiments of the present disclosure, as illustrated in FIG. 1 and FIG. 2, in the second direction, the support frame 70 may be disposed adjacent to an end of the third cross member 60.

In the second direction, the support frame 70 may be disposed adjacent to the end of the third cross member 60, and the end of the third cross member 60 is connected to the subframe longitudinal member 30. Such an arrangement facilitates the support frame 70 to be simultaneously connected to the third cross member 60, the second cross member 20, and the corresponding subframe longitudinal member 30 and enables an arrangement position of the support frame 70 to be reasonable, enhancing the structural connection strength of the subframe 100, avoiding the phenomenon of the stress concentration on the subframe 100, and further improving the fatigue strength of the subframe 100.

According to some embodiments of the present disclosure, as illustrated in FIG. 1 and FIG. 2, a cross-section of the support frame 70 may be in a triangular shape.

The cross-section of the support frame 70 may be in the triangular shape, or the cross-section of the support frame 70 may be in a substantially triangular shape. The cross-section of the support frame 70 taken along an XY plane is in the triangular shape or in the substantially triangular shape. In other words, the cross-section of the support frame 70 taken along a horizontal plane is in the triangular shape or in the substantially triangular shape. In an exemplary embodiment of the present disclosure, two support frames 70 are provided. The two support frames 70 are spaced apart from each other in the second direction and respectively disposed at the both ends of the third cross member 60. A front end of each support frame 70 is welded to the third cross member 60, an outer side edge of each support frame 70 is welded to an inner side wall of the corresponding subframe longitudinal member 30, and a rear end of each support frame 70 is welded to the second cross member 20. By virtue of the principle of triangular stability, the support frame 70 can provide support for the third cross member 60 in the length direction of the vehicle, greatly improving the rigidity of the third cross member 60 in the length direction of the vehicle, and further improving the rigidity of the subframe 100 in the length direction of the vehicle.

Also, the support frame 70 is simultaneously connected at the intersections of the second cross member 20, the third cross member 60, and the corresponding subframe longitudinal member 30, which can further enhance the structural connection strength of the subframe 100, avoiding the phenomenon of the stress concentration on the subframe 100, and further improve the fatigue strength of the subframe 100.

According to some embodiments of the present disclosure, as illustrated in FIG. 1 and FIG. 2, the support frame 70 may have a steering gear mounting hole 71.

The support frame 70 may have the steering gear mounting hole 71. The steering gear mounting hole 71 may be located at a central part of the support frame 70, or the steering gear mounting hole 71 may also be located at a part of the support frame 70 that is close to an edge of the support frame 70, but the present disclosure is not limited thereto. The steering gear mounting hole 71 may also be located at other parts of the support frame 70, as long as the support frame 70 has the steering gear mounting hole 71. Thus, the support frame 70 has the steering gear mounting hole 71 to facilitate mounting of a steering gear.

According to some embodiments of the present disclosure, as illustrated in FIG. 1 to FIG. 3, the support frame 70 may include a first support frame plate 72 and a second support frame plate 73. The first support frame plate 72 and the second support frame plate 73 are arranged in the third direction of the subframe 100, and are connected to each other. The first support frame plate 72 and the second support frame plate 73 jointly define a cavity structure. The first direction, the second direction, and the third direction are perpendicular to each other.

As illustrated in FIG. 3, the third direction may be Z direction. In other words, the third direction may be the height direction of the vehicle, the first direction is the length direction of the vehicle, the second direction is the width direction of the vehicle, and the first direction, the second direction, and the third direction are perpendicular to each other.

The support frame 70 may include the first support frame plate 72 and the second support frame plate 73. In an exemplary embodiment of the present disclosure, the first support frame plate 72 and the second support frame plate 73 may be made of two identical channel steel plates, such that the first support frame plate 72 and the second support frame plate 73 can jointly define the cavity structure. The first support frame plate 72 and the second support frame plate 73 are arranged in the third direction of the subframe 100, and connected to each other. The first support frame plate 72 may be welded to the second support frame plate 73, or the first support frame plate 72 may be bolted to the second support frame plate 73, but the present disclosure is not limited thereto. The first support frame plate 72 may be connected to the second support frame plate 73 in other manners, as long as first support frame plate 72 and the second support frame plate 73 are arranged in the third direction of the subframe 100, and connected to each other. Thus, the support frame 70 is constructed as a cavity structure formed by connection of two plates, which can reduce a weight of the support frame 70, reducing the weight of the subframe 100, and further reducing the manufacturing costs of the subframe 100. Stability and strength of the support frame 70 can also be improved, further improving durability of the support frame 70.

According to some embodiments of the present disclosure, as illustrated in FIG. 1, the support frame 70 has a first side connection end 74 and a second side connection end 75 opposite to the first side connection end 74. The first side connection end 74 is fixedly connected to the third cross member 60. The second side connection end 75 is fixedly connected to the second cross member 20.

The first side connection end 74 is arranged opposite to the second side connection end 75 in the first direction, and the first side connection end 74 is fixedly connected to the third cross member 60. For example, the first side connection end 74 may be welded to the third cross member 60, or the first side connection end 74 may be bolted to the third cross member 60, but the present disclosure is not limited thereto. The first side connection end 74 may also be connected to the third cross member 60 in other manners, as long as the first side connection end 74 is fixedly connected to the third cross member 60. Thus, the first side connection end 74 is fixedly connected to the third cross member 60, such that the third cross member 60 can be supported in the front-rear direction of the vehicle, improving the longitudinal rigidity of the third cross member 60 in the front-rear direction of the vehicle.

The second side connection end 75 is fixedly connected to the second cross member 20. For example, the second side connection end 75 may be welded to the second cross member 20, or the second side connection end 75 may be bolted to the second cross member 20, but the present disclosure is not limited thereto. The second side connection end 75 may also be connected to the second cross member 20 in other manners, as long as the second side connection end 75 is fixedly connected to the second cross member 20. The support frame 70 is adapted to be mounted between the third cross member 60 and the second cross member 20 of the subframe 100 and adapted to be connected between the third cross member 60 and the second cross member 20, which can enhance the structural connection strength of the subframe 100 and also avoid the stress concentration, thus improving the fatigue strength of the subframe 100, reducing the noise transmission from the powertrain 200 of the vehicle in the front-rear direction of the vehicle, further reducing the noise pollution of the vehicle.

According to some embodiments of the present disclosure, as illustrated in FIG. 1, the support frame 70 further has a third side connection end 76. The third side connection end 76 is located between the first side connection end 74 and the second side connection end 75, and is adjacent to both the first side connection end 74 and the second side connection end 75. In the second direction, the outermost subframe longitudinal member 30 is fixedly connected to the third side connection end 76 of the corresponding support frame 70 at an inside surface of the outermost subframe longitudinal member 30.

The third side connection end 76 is located between the first side connection end 74 and the second side connection end 75, and is adjacent to both the first side connection end 74 and the second side connection end 75.

The third side connection end 76 is fixedly connected to an inside surface of the corresponding outermost subframe longitudinal member 30. For example, the third side connection end 76 may be welded to the inside surface of the corresponding subframe longitudinal member 30, or the third side connection end 76 may be bolted to the inside surface of the corresponding subframe longitudinal member 30, but the present disclosure is not limited thereto. The third side connection end 76 may be connected to the inside surface of the corresponding subframe longitudinal member 30 in other manners, as long as the third side connection end 76 is fixedly connected to the inside surface of the corresponding subframe longitudinal member 30 of the subframe 100. Thus, by connecting the support frame 70 at the intersections of the third cross member 60, the second cross member 20, and the corresponding subframe longitudinal member 30, and by virtue of the principle of triangular stability, the structural connection strength of the subframe 100 can be enhanced, and the phenomenon of the stress concentration on the subframe 100 can also be avoided, thus improving the stability and the fatigue strength of the subframe 100.

According to some embodiments of the present disclosure, as illustrated in FIG. 1, a stabilizer bar mounting support 80 is fixedly provided at the outermost subframe longitudinal member 30, that is arranged outermost in the second direction, of the subframe longitudinal members. The stabilizer bar mounting support 80 is fixedly connected to the corresponding support frame 70.

The outermost subframe longitudinal member 30 may be welded to the stabilizer bar mounting support 80, or the outermost subframe longitudinal member 30 may be bolted to the stabilizer bar mounting support 80, but the present disclosure is not limited thereto. The outermost subframe longitudinal member 30 may also be connected to the stabilizer bar mounting support 80 in other manners, as long as the stabilizer bar mounting support 80 is fixedly provided at the outermost subframe longitudinal member 30.

The stabilizer bar mounting support 80 is connected to the corresponding support frame 70. For example, the stabilizer bar mounting support 80 may be welded to the corresponding support frame 70, or the stabilizer bar mounting support 80 may be bolted to the corresponding support frame 70, but the present disclosure is not limited thereto. The stabilizer bar mounting support 80 may be connected to the corresponding support frame 70 in other manners, as long as the stabilizer bar mounting support 80 is connected to the corresponding support frame 70. It should be noted that the stabilizer bar mounting support 80 corresponding to the support frame 70 refers to the stabilizer bar mounting support 80 that is adjacent to and near the support frame 70 in the second direction.

Thus, by connecting the stabilizer bar mounting support 80 to the corresponding support frame 70 and also connecting the stabilizer bar mounting support 80 to the corresponding subframe longitudinal member 30, connection strength among the stabilizer bar mounting support 80, the corresponding support frame 70, and the corresponding subframe longitudinal member 30 is enhanced, which enables a load on the stabilizer bar mounting support 80 to be dispersed across the subframe 100, preventing a phenomenon of stress concentration on the stabilizer bar mounting support 80, and improving the fatigue strength and the rigidity of the subframe 100. Also, the transmission of the road noise through the stabilizer bar mounting support 80 to the passenger compartment can also be reduced, further enhancing the riding comfort of the vehicle.

According to some embodiments of the present disclosure, as illustrated in FIG. 1 and FIG. 2, a length dimension of the third cross member 60 is L1. In a length direction of the third cross member 60, a connection length between the support frame 70 and the third cross member 60 is L2, satisfying: 0.1 L1≤ L2≤0.3 L1.

In the length direction of the third cross member 60, the connection length between the support frame 70 and the third cross member 60 is L2. L2 may be any value that satisfies 0.1L1≤L2≤0.3L1. For example, L2 may be 0.1L1, 0.11L1, 0.12L1, 0.15L1, 0.2L1, 0.3 L1, etc., but the present disclosure is not limited thereto. L2 may also be any other value that satisfies 0.1L1≤L2≤0.3 L1, as long as the value of L2 satisfies 0.1L1≤L2≤0.3L1. Thus, the value of L2 satisfying 0.1L1≤L2≤0.3L1 enables the support frame 70 to be firmly connected to the third cross member 60, improving the rigidity of the third cross member 60, and preventing the support frame 70 from being excessively large in volume which would interfere with other structures. As a result, structural compactness of the subframe 100 is improved, further reducing the manufacturing costs of the subframe 100.

The vehicle body assembly according to the embodiments of the present disclosure includes the above-described vehicle body 40 having a vehicle body longitudinal member 41. The vehicle body assembly also includes the above-described subframe 100 fixedly disposed at the vehicle body longitudinal member 41 and located below the vehicle body longitudinal member 41. In this way, the fatigue strength and the rigidity of the subframe 100 can be improved, further enhancing the safety performance of the vehicle.

The vehicle according to the embodiments of the present disclosure includes the above-described vehicle body assembly, which can improve the fatigue strength and the rigidity of the subframe 100, further enhancing the safety performance of the vehicle.

Reference throughout this specification to "an embodiment", "some embodiments", "schematic embodiments", "an example", "a specific example", or "some examples" means that a particular feature, structure, material, or characteristic described in connection with the embodiment or example is included in at least one embodiment or example of the present disclosure. In this specification, exemplary descriptions of above terms are not necessarily referring to the same embodiment or example. Further, the particular features, structures, materials, or characteristics can be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. A subframe of a vehicle, comprising:
a first cross member and a second cross member that are spaced apart from each other in a first direction of the subframe;
a plurality of subframe longitudinal members arranged in a second direction of the subframe, each of the plurality of subframe longitudinal members being connected to the first cross member and the second cross member, the first direction being perpendicular to the second direction, and wherein each of outermost subframe longitudinal members of the plurality of subframe longitudinal members is connected to a control arm mounting frame;
a third cross member located between the first cross member and the second cross member in the first direction, each of the plurality of subframe longitudinal members being connected to the third cross member, and wherein in the second direction, two ends of the third cross member are arranged to correspond to the control arm mounting frames of the corresponding subframe longitudinal members, respectively;
a suspension mounting frame fixedly disposed on the third cross member; and
a support frame located between the third cross member and the second cross member in the first direction and fixedly connected to the third cross member.

2. The subframe of the vehicle according to claim 1, wherein the two ends of the third cross member are arranged to correspond to rear ends of the corresponding control arm mounting frames, respectively.

3. The subframe of the vehicle according to claim 1 or 2, wherein the suspension mounting frame is disposed at a middle part of the third cross member.

4. The subframe of the vehicle according to any one of claims 1 to 3, wherein the suspension mounting frame comprises a first mounting portion and a second mounting portion, wherein:
the first mounting portion is opposite to and spaced apart from the second mounting portion in the second direction;
each of the first mounting portion and the second mounting portion has a first mounting hole; and
a fitting structure of an annular shape is fixedly disposed at the first mounting portion and/or the second mounting portion, wherein the fitting structure has an internal thread on an inner circumferential wall of the fitting structure and corresponds to a corresponding first mounting hole.

5. The subframe of the vehicle according to claim 4, wherein the suspension mounting frame further comprises a connection portion, wherein:
the connection portion is connected between the first mounting portion and the second mounting portion; and
the connection portion is arranged adjacent to a lower end of the first mounting portion and a lower end of the second mounting portion.

6. The subframe of the vehicle according to claim 4 or 5, wherein:
the first mounting portion has a bent portion at an upper end of the first mounting portion; and/or
the second mounting portion has a bent portion at an upper end of the second mounting portion, wherein:
the bent portion of the first mounting portion and/or the bent portion of the second mounting portion is connected to the third cross member, and bent towards an outside of the third cross member in the second direction.

7. The subframe of the vehicle according to any one of claims 1 to 6, wherein:
the third cross member is constructed as an arc-shaped structure; and
in the first direction, the third cross member protrudes towards the second cross member.

8. The subframe of the vehicle according to claim 7, wherein the third cross member comprises a first cross member body, a second cross member body, and a third cross member body, wherein:
the second cross member body is connected between the first cross member body and the third cross member body;
the second cross member body is constructed as an arc-shaped structure protruding towards the second cross member; and
each of the first cross member body and the third cross member body is connected to a corresponding subframe longitudinal member of the plurality of subframe longitudinal members.

9. The subframe of the vehicle according to claim 8, wherein:
a height dimension of the second cross member body in a third direction of the subframe is H1; and
a width dimension of the second cross member body in the first direction of the subframe is H2, where H2<H1;
wherein the first direction, the second direction, and the third direction are perpendicular to each other.

10. The subframe of the vehicle according to claim 8 or 9, wherein the first cross member body and/or the third cross member body has a flat structure.

11. The subframe of the vehicle according to any one of claims 1 to 10, wherein in a third direction of the subframe, an orthographic projection of the third cross member is located on a rear side of an orthographic projection of a powertrain of the vehicle.

12. The subframe of the vehicle according to any one of claims 1 to 11, wherein the support frame is fixedly connected to the second cross member.

13. The subframe of the vehicle according to claim 12, wherein in the second direction, the outermost subframe longitudinal member is fixedly connected to a corresponding support frame.

14. The subframe of the vehicle according to claim 13, wherein:
two subframe longitudinal members are provided; and
the support frame is connected between the third cross member and each of the two subframe longitudinal members.

15. The subframe of the vehicle according to any one of claims 1 to 14, wherein in the second direction, the support frame is disposed adjacent to an end of the third cross member.

16. The subframe of the vehicle according to any one of claims 1 to 15, wherein a cross-section of the support frame is in a triangular shape.

17. The subframe of the vehicle according to any one of claims 1 to 16, wherein the support frame has a steering gear mounting hole.

18. The subframe of the vehicle according to any one of claims 1 to 17, wherein the support frame comprises a first support frame plate and a second support frame plate, wherein:
the first support frame plate and the second support frame plate are arranged in a third direction of the subframe and connected to each other;
the first support frame plate and the second support frame plate jointly define a cavity structure; and
the first direction, the second direction, and the third direction are perpendicular to each other.

19. The subframe of the vehicle according to any one of claims 1 to 18, wherein the support frame has a first side connection end and a second side connection end opposite to the first side connection end, wherein:
the first side connection end is fixedly connected to the third cross member; and
the second side connection end is fixedly connected to the second cross member.

20. The subframe of the vehicle according to claim 19, wherein the support frame further has a third side connection end located between the first side connection end and the second side connection end, wherein:
the third side connection end is adjacent to each of the first side connection end and the second side connection end; and
in the second direction, an inside surface of the outermost subframe longitudinal member is fixedly connected to the third side connection end of the corresponding support frame.

21. The subframe of the vehicle according to any one of claims 1 to 20, wherein a stabilizer bar mounting support is fixedly disposed at an outermost subframe longitudinal member of the plurality of subframe longitudinal members in the second direction, the stabilizer bar mounting support being fixedly connected to the corresponding support frame.

22. The subframe of the vehicle according to any one of claims 1 to 21, wherein:
a length dimension of the third cross member is L1; and
in a length direction of the third cross member, a connection length between the support frame and the third cross member is L2, where 0.1L1≤ L2≤0.3L1.

23. A body assembly of a vehicle, comprising:
a vehicle body having a vehicle body longitudinal member;
a subframe fixedly disposed at the vehicle body longitudinal member and located below the vehicle body longitudinal member, the subframe being the subframe of the vehicle according to any one of claims 1 to 22.

24. A vehicle, comprising the body assembly of the vehicle according to claim 23.
